# DEMANDE DE BREVET EUROPEEN

(11) **EP 1 020 119 A1**
(43) Date de publication de la demande: **19.07.2000**
(21) Numéro de dépôt: 00460004.5
(22) Date de dépôt: 17.01.2000
(51) Int. Cl.: A23B 7/04, A23B 7/045

(54) **Procédé de conservation de tubercules**

(30) Priorité: 15.01.1999 FR 9900539
(71) Demandeur: Geffrault E.A.R.L., 35370 Etrelles (FR)
(72) Inventeur: Geffrault, Joseph, 35370 Etrelles (FR); Geffrault, Marc, 35370 Etrelles (FR); Geffrault, François, 35500 Cornille (FR)
(74) Mandataire: Maillet, Alain

(57) **Abrégé**

La présente invention concerne un procédé de conservation par congélation ou surgélation de tubercules crus, notamment de pommes de terre crues. La congélation ou la surgélation du ou des tubercules est effectuée, les tubercules étant crus, pelés, puis mis en sacs hermétiquement sous vide.

La décongélation, en vue de la préparation des produits à la cuisson, s'effectue par trempage du ou des sacs, toujours hermétiquement fermés, dans de l'eau à une température appropriée, puis le ou les tubercules extraits du ou des sacs sont cuits.

## Description

La présente invention concerne un procédé de conservation de tubercules crus épluchés, notamment des pommes de terre crues épluchées, par congélation ou surgélation, les tubercules étant ensuite réchauffés et cuits selon des méthodes classiques de cuisson.

On ne sait pas, dans une atmosphère à température ambiante, conserver des pommes de terre crues épluchées, car leur surface pelée est attaquée par l'oxygène de l'air. Comme le décrit le préambule du document US-B-2 628 905, quand les pommes de terre ne restent même que quelques heures ou moins en contact avec l'atmosphère, leur surface devient noire, résultat d'une oxydation, et ce changement de couleur persiste même après cuisson, ce qui les rend impropres à la consommation. Pour éviter cette oxydation, on a songé à conserver les tubercules sous l'eau, mais quand on veut ensuite procéder à une cuisson à l'huile, on rencontre d'autres ennuis: grésillement, formation de mousse, etc.

Dans le document US-B-2 628 905, la méthode préconisée pour préserver de la décoloration, des tranches de végétaux ou de légumes crus, en particulier des pommes de terre, consiste à tremper les aliments dans une solution à base d'eau dont le pH demeure stable, de l'ordre de 5,8, afin de ne pas décolorer les aliments et de ne pas leur communiquer de goût désagréable. La solution contient du bisulfite de sodium (dont le pH est normalement inférieur à 5,2), ainsi que du carbonate de sodium et de l'acide citrique.

Dans le document WO-B-98/16118, on décrit un procédé dans lequel les pommes de terre sont pelées, puis trempées dans une saumure à 4° C à une concentration de 125 % pendant 120 secondes. Les pommes de terre sont ensuite trempées dans une solution à base de métadisulfite de sodium à une concentration de 500-18000 ppm à 4° C pendant 120 secondes, puis égouttées pendant 3 minutes à 4° C. Les pommes de terre sont stockées dans des conditions de réfrigération normales à 4° C. Les pommes de terre peuvent se conserver pendant 20 jours en préservant apparence, couleur, structure et propriété de cuisson.

Dans le document GB-A-2 205 478, les produits sont au préalable trempés dans un bain antioxydant à base de métadisulfite de sodium. Ces produits sont ensuite stockés dans un gaz comprenant 0,5 % à 10 % d'oxygène et 20 à 50 % de dioxyde de carbone, avec pour complément de l'azote.

Dans le document EP-B-554 468, les pommes de terre sont cuisinées, puis refroidies doucement de la température ambiante à une température de congélation. Pendant le refroidissement, la température à coeur de la pomme de terre est amenée à température ambiante dans un délai supérieur ou égal à 10 minutes. Le refroidissement s'effectue par soufflage d'air à une vitesse de 2 à 3 m/s et à une température de 0° C pendant 15 mn. La congélation s'effectue en deux étapes:
a/Le coeur de la pomme de terre est maintenu à une température de 0° C (température de cristallisation) pendant au moins 20 minutes;
b/ Refroidissement jusqu'à température de conservation par surgélation.

Dans le document US-B-4 800 098, on prévoit que les pommes de terre sont non pelées et sont cuites entre 100° et 150° C. pendant 2 à 40 minutes dans un bain d'huile afin de déposer un film d'huile sur leur surface. Les pommes de terre, ainsi traitées, sont ensuite congelées.

Dans le document DE-A-2549434, les produits sont blanchis ou cuits complètement avant congélation et sont épluchés par la suite. Pour une période de congélation longue, les "yeux" et environ 50 % de la peau peuvent être enlevés avant congélation.

Les documents cités ci-dessus montrent ainsi plusieurs principes de conservation, mais qui pour plusieurs raisons ne donnent pas satisfaction. Un de ces principes consiste à peler les pommes de terre et à éviter la dégradation de leurs surfaces en les plongeant dans une solution de saumure ou contenant du métadisulfite, ce qui n'est pas économique. Un autre principe consiste à cuire les pommes de terre, puis à les congeler, mais il y a dégradation de la texture de la pomme de terre lors de la décongélation, ce qui altère fortement le goût du produit final. On peut atténuer cette dégradation mais au prix d'une procédure compliquée.

Un objet de la présente invention consiste donc à prévoir un procédé qui pallie ces inconvénients majeurs, en n'altérant pas les qualités du produit d'origine (goût, texture, et aspect extérieur).

Un autre objet de l'invention est de supprimer les phases de pré-cuisson ou de traitement chimique par un procédé simple permettant d'améliorer le prix de revient du produit final.

Un autre objet de l'invention est de supprimer la présence des matières grasses pendant la période de surgélation en raison de la précuisson favorisant des produits à forte teneur en calories.

Suivant une caractéristique de la présente invention, la congélation du ou des pommes de terre est effectuée ceux-ci étant crus, pelés, puis mis en sacs hermétiquement sous vide et la décongélation en vue de leur préparation à la cuisson s'effectue par trempage du ou des sacs, toujours hermétiquement fermés, dans de l'eau à une température appropriée, puis le ou les tubercules extraits du ou des sacs sont cuits.

Suivant une autre caractéristique de la présente invention, avant la congélation ou surgélation, les pommes de terre sont mises en forme en vue de leur utilisation finale.

Suivant une autre caractéristique de la présente invention, avant la congélation ou surgélation, les pommes de terre sont essorées durant une période variant de 1 à 5 minutes.

Suivant une autre caractéristique, avant la mise en sac s'effectue une pré congélation des pommes de terre.

Suivant une autre caractéristique, la température appropriée pour la décongélation est de préférence à environ 100° C.

Suivant une autre caractéristique de l'invention, la congélation est de préférence effectuée entre -20° C et - 60° C.

Les caractéristiques de l'invention apparaîtront plus clairement à la lecture suivante de la description d'un exemple de réalisation du procédé de conservation et de préparation de pommes de terre crues, puis congelées ou surgelées.

On peut distinguer dans une mise en oeuvre du l'invention qui est décrite à titre d'exemple, les tubercules étant supposés être des pommes de terre, sept étapes successives, énumérées ci-dessous:
1 - Epluchage des pommes de terre;
2 - Contrôle de la surface des pommes de terre épluchées;
3 - Mise en forme des produits en vue de leur utilisation;
4 - Essorage des produits;
5 - Mise en sacs sous vide des produits;
6 - Congélation ou surgélation des sacs de produits;
7 - Décongélation et cuisine des produits.

Dans la première étape, l'épluchage peut être réalisé de toute manière connue, par exemple de manière classique par abrasion dans un tambour.

Dans la seconde étape, le contrôle de la surface des pommes de terre épluchées a pour but de repérer des défauts, tels que des yeux, des taches, etc., le contrôle se faisant, par exemple, sur une table de parage.

Dans la troisième étape, après le contrôle ci-dessus, on met en forme à partir des pommes de terre épluchées, puis contrôlées, des produits selon l'utilisation pour laquelle ils sont prévus. La mise en forme entraîne généralement une coupe ou une découpe de chaque pomme de terre en cubes, en lamelles, en noisettes, en frites, etc., afin d'obtenir un produit. Cette troisième étape de mise en forme ou de coupe n'est pas indispensable, ni utile si le produit doit être utilisé dans sa forme originale, par exemple en pomme vapeur pour l'accompagnement de certains plats du type poissons.

Dans la quatrième étape, facultative, on procède à l'essorage du produit, durant une période variant approximativement de 1 à 5 minutes. Cette opération est destinée à sécher au mieux la surface du produit, en particulier s'il est destiné à être frit.

Dans la cinquième étape, on met les produits dans des sacs ou emballages sous vide selon une technologie bien connue, pour éviter toute oxydation de leur surface. Les emballages sont, par exemple, des sacs recyclables qui sont prévus pour contenir des denrées alimentaires.

A titre de variante, on peut également prévoir d'effectuer une pré congélation des pommes de terre, avant la mise en sac sous vide, pour éviter la prise en masse desdites pommes de terre. En effet, les pommes de terre notamment en rondelles ont tendance à former différents blocs. Cette étape supplémentaire permet donc une meilleure utilisation du produit lors des étapes suivantes.

Dans la sixième étape, on procède à la surgélation entre -20° C et -80° C, dans des conditions réglementées par les textes en vigueur. Le produit peut être conservé au congélateur quelques mois à -12° C ou jusqu'à deux ans à -18° C.

La septième étape comporte, en fait, deux phases: décongélation, puis cuisine des produits.

Dans la phase décongélation, on immerge, tout d'abord, le sac contenant sous vide le produit dans une eau chaude appropriée. De préférence, cette eau chaude sera une eau bouillante à 100° C. Ce premier choc thermique, soit un passage de -18° c à 100° C par immersion dans cette eau bouillante évite d'altérer le produit lors de cette phase de décongélation.

L'inconvénient majeur d'une décongélation trop lente du produit pourrait entraîner après réchauffement un brunissement des pommes de terre qui peuvent présenter par ailleurs un affaissement et une texture farineuse. De plus, le produit en subissant ce choc thermique important ne permet pas la transformation de l'amidon en glucose.

Cette phase obligatoire dans de l'eau bouillante dure environ 30 mn, en fonction de la masse de produit et/ou de la grosseur du produit. Cette phase ultime peut être effectuée selon un autre mode par exemple en utilisant un four micro-ondes. L'emballage y est placé pendant environ 20 mn à puissance maximale. On peut encore utiliser un four classique pendant 1 heure à 100° C. Les modes de décongélation décrits ci-dessous ne sont pas exhaustifs.

Ladite phase, pour des produits particuliers, peut également s'effectuer avec des produits en vrac, c'est-à-dire que l'on décongèle le produit hors du sac hermétique selon un mode adéquat. Avant l'ouverture du sac pour cette utilisation en vrac, il est recommandé de tremper ledit sac quelques minutes dans une eau en ébullition de manière à décoller ou séparer les produits congelés.

Dans la phase cuisine, le produit est extrait de son sac. Il peut être traité par le consommateur comme un produit frais destiné à être cuit.

Il est intéressant alors de constater que le produit conserve une excellente saveur, un excellent aspect et une excellente texture. Le produit est destiné aux ménagères et aux professionnels de la restauration.

Les pommes de terre ainsi préparées peuvent se cuisiner de différentes manières et pour différentes utilisations, par exemple: pommes sautées, rissolées, au four, en friture.

Ce procédé original permet avec une mise en oeuvre industrielle simple et un gain de production certain, d'obtenir un produit haut de gamme. En effet, on préserve le goût et la valeur alimentaire de la pomme de terre quel que soit la durée de conservation. Ce délai peut être de plus de deux ans.

On constate encore lors d'une utilisation desdits produits en friture ou à la poêle qu'ils permettent de garder une huile de bonne qualité plus longtemps et d'obtenir par exemple une frite très légère.

Ce procédé permet aux différents opérateurs de conserver une grande souplesse pour cuisiner la pomme de terre dans des utilisations très diverses, avec un produit final présentant des qualités organoleptiques proches des produits "frais".

Comme on l'a déjà mentionné l'exemple de mise en oeuvre décrit ci-dessus concerne plus spécialement les pommes de terre.

## Revendications

1. Procédé de conservation par congélation ou surgélation et de décongélation de pommes de terre crues, caractérisé en que la congélation ou la surgélation du ou des pommes de terre est effectuée, les pommes de terre étant crues, pelées, puis mises en sac hermétiquement sous vide et en ce que ladite décongélation, en vue de la préparation des produits à la cuisson, s'effectue par trempage du ou des sacs, toujours hermétiquement fermés, dans de l'eau à une température appropriée, puis les pommes de terre extraites du ou des sacs sont cuites.

2. Procédé de conservation suivant la revendication 1, caractérisé en ce qu'avant la congélation ou surgélation, les pommes de terre sont mises en forme en vue de leur utilisation finale.

3. Procédé de conservation suivant la revendication 1, caractérisé en ce qu'avant la congélation ou surgélation, les pommes de terre sont essorées durant une période variant de 1 à 5 minutes.

4. Procédé de conservation suivant la revendication 1, caractérisé en ce qu'avant la mise en sac s'effectue une pré congélation des pommes de terre.

5. Procédé de conservation suivant la revendication 1, suivi d'une décongélation, caractérisé en ce que la température appropriée est de préférence à environ 100° C.

6. Procédé de conservation suivant la revendication 1, caractérisé en ce que la congélation est de préférence effectuée entre -20° C et -60° C.

7. Procédé selon l'une des revendications précédentes, caractérisé en ce qu'il consiste à:
1 - Eplucher des pommes de terre;
2 - Contrôler de surface des pommes de terre épluchées;
3 - Mettre en forme des produits en vue de leur utilisation;
4 - Essorer des produits;
5 - Mettre en sacs sous vide des produits;
6- Congeler ou surgéler des sacs de produits;
7- Décongeler et cuisine des produits.
